Europäisches Patentamt

European Patent Office

Office européen des brevets

(11) Publication number: **0 264 603 B1**

# EUROPEAN PATENT SPECIFICATION

(12)

(45) Date of publication of patent specification: **03.06.92**  (51) Int. Cl.⁵: **G09G 1/16**, G09G 1/28

(21) Application number: **87113100.9**

(22) Date of filing: **08.09.87**

(54) Raster scan digital display system.

(30) Priority: **14.10.86 US 918249**

(43) Date of publication of application:
**27.04.88 Bulletin 88/17**

(45) Publication of the grant of the patent:
**03.06.92 Bulletin 92/23**

(84) Designated Contracting States:
**AT BE CH DE ES FR GB GR IT LI LU NL SE**

(56) References cited:
**EP-A- 0 085 480      EP-A- 0 128 051
DE-A- 3 420 919      FR-A- 2 246 911
GB-A- 2 157 927      US-A- 4 087 808
US-A- 4 673 930**

(73) Proprietor: **International Business Machines
Corporation
Old Orchard Road
Armonk, N.Y. 10504(US)**

(72) Inventor: **Morel, Jeanne Ellen
6904 Consolata Street
Boca Raton Florida 33433(US)**
Inventor: **Rackley, Darwin Preston
17755 Maplewood Drive
Boca Raton Florida 33431(US)**
Inventor: **Trynosky, Stephen Wayne
8924 SW 6th Street
Boca Raton Florida 33433(US)**
Inventor: **Wall, William Allan
1001 NW 8th Street
Boca Raton Florida 33432(US)**

(74) Representative: **Blakemore, Frederick Norman
IBM United Kingdom Limited Intellectual
Property Department Hursley Park
Winchester Hampshire SO21 2JN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to digital display systems and in particular to such systems which employ a raster scan display device.

Digital display systems for use with computer systems are well known. In many graphics systems employing raster scan display devices, the all points addressable or bit plane system is employed. In this system, data is laid out in a refresh store such that when it is read out for display, successive data groups from the store relate directly to successive picture elements on the display. One of the early descriptions of such a system is found in an article entitled "Computer Graphics in Colour" by Peter B. Denes, which appeared in the Bell Laboratories Record, May 1976 at pages 139 through 146. Many current micro computer systems employ the all points addressable system to generate graphics displays. One example is the Personal Computer produced by International Business Machines Corporation, when incorporating a Colour/Graphics adapter card or an Enhanced Graphics Adapters Card. Most of the known systems can be switched to provide different display definitions, including different numbers of picture elements per raster frame, different numbers of display lines, and different numbers of available Colours per picture element. None of the prior systems, to Applicants' knowledge, have employed an arrangement switchable between a first mode in which data is extracted from a refresh store at one frequency and transmitted to the display at the same frequency and a second mode in which the data is extracted from the store at this frequency but transmitted to the delay device at a frequency which is an even dividend, For example half, of the extraction frequency.

DE-A-3420919 describes a digital display system including a refresh store for storing picture element data at locations corresponding to locations of associated picture elements on a display device. The display system also includes address means for reading consecutive picture element data groups from the refresh store at a first clock frequency, and a conversion circuit for converting the data groups to picture element drive signal groups for the display device. Furthermore, the display system includes switching means which can be switched between different data rates in such a manner that an image stored in the refresh store can be reproduced on the display device using different scale factors.

According to the invention, there is provided a digital display system for driving a raster scan display device, including: a refresh store for storing picture element data at locations corresponding to locations of associated picture elements on said display device; means for reading consecutive picture element data groups from said refresh store at a first clock frequency, means for converting said data groups to picture element drive signal groups for the display device and switching means for switching said means for converting between a first mode in which each said data group is converted to an individual picture element drive signal group delivered to the display device at said first clock frequency, and a second mode in which $2^n$ (where n is a positive integer) successive data groups are combined to generate an individual picture element drive signal group delivered to the display device at the n th sub harmonic of said clock frequency, characterised in that said means for converting includes first gating means coupled to receive picture element data groups and second gating means coupled to receive the output of said first gating means, said first and second gating means being clocked at said first clock frequency, said switching means being coupled to the outputs of said first and second gating means for transmitting only the output of said second gating means in said first mode and for combining the outputs of said first and second gating means in said second mode.

A preferred embodiment of the invention will now be described by way of example with reference to the accompanying drawings, in which:

Figure 1 is a block diagram of a digital display adapter for coupling a central processing unit a raster scan display device;

Figure 2 is a detailed diagram of gates and a combining circuit employed in the Figure 1 system;

Figure 3 is a block diagram of a selector circuit employed in the Figure 1 system; and

Figure 4 shows the data content of shift registers used in the Figure 1 system in one mode of operation thereof.

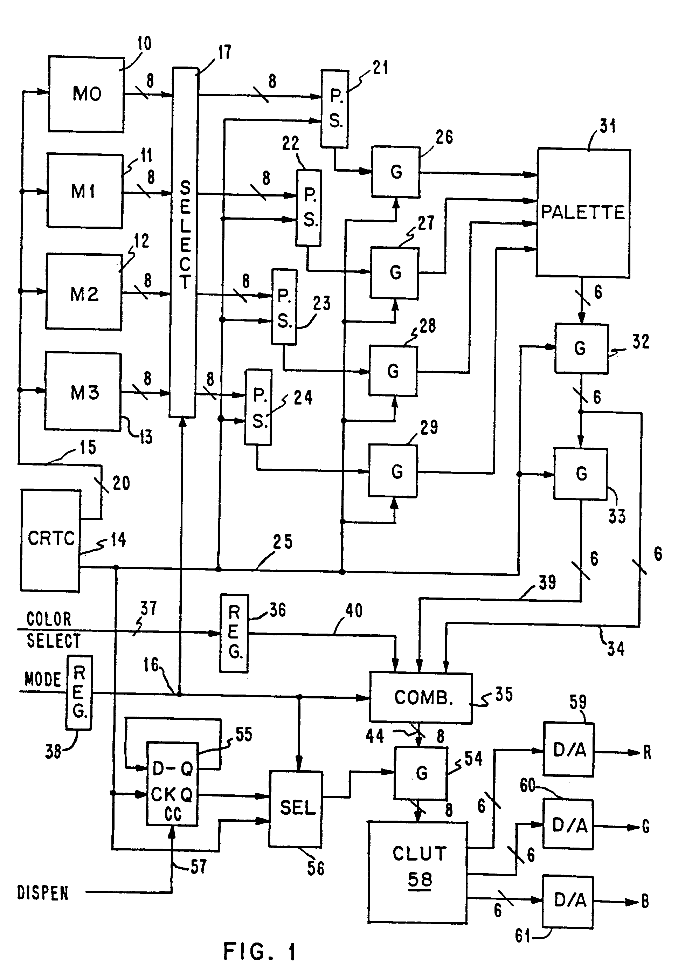

Figure 1 is a block diagram of a digital display system embodying the invention. The system has input lines coupled to a central processing unit (not shown) and output lines coupled to a cathode ray tube display device (not shown). The system includes a refresh store comprising four planes 10-13 for storing, respectively, data representing different colour components of signals to be displayed. Thus, for example plane M0 (10) stores red components, plane M1 (11), green components, plane M2 (12), blue components and plane M3 (13), intensity components. Data is stored in the refresh store in all points addressable (APA) configuration. In this configuration, bytes of data are located in the planes at locations corresponding to the positions of picture elements on the cathode ray tube display. Thus, for example, at the start of a CRT scan, four selected bytes are read simultaneously from identical locations in each of the planes of the refresh store, one byte from each plane. These bytes are normally used to define the colour and/or intensity of the first eight picture elements of the display. Subsequently, the bytes at an address immediately following the initially read address are read to define the colour and/or intensity of the next eight picture elements of the display. This process continues until all the picture elements have been defined and displayed. Depending on the definition of the display and the size of the refresh store, the data for a display frame may either fill the refresh store or be stored in a portion of the addressable locations therein. In the former case, the initial address for a display frame is the first address of each plane of the refresh store. In the latter case, the initial address for a display frame may be chosen at a selected address within the refresh store. By changing this initial address from frame to frame, panning and animation functions may be performed. The sequential refresh store addresses for reading the display data from this store are generated by a cathode ray tube controller (CRTC) system 14 and applied to the refresh store through 20 address lines 15. CRTC system 14 may be of the type MC6845 manufactured by Motorola Inc., and may be controlled in a known manner by input signals on lines (not shown), including clock and control lines, from the central processor unit. For simplicity, direct connections between the refresh memory and central processor unit have not been shown. These connections would, of course, include data bus and address bus connections, probably to address lines 15 through a multiplexer system. These connections permit the central processor unit to access the refresh store to insert and update data to be displayed.

The present invention is directed to an arrangement for employing the data in the refresh store to provide different display resolution signals, both with respect to the numbers of picture elements in a display frame and the number of available colours for each picture element. As an example, three switchable resolutions will be described, the first two providing a 640 × 200 picture element display with 16 or 64 colours per element respectively, and a third provided a 320 × 200 picture element display with 256 colours per element.

Firstly, the operation when the system is switched, by means of mode signals on lines 16 from a register 38 which receives and holds mode control signals from the central processing unit, to the 640 × 200 picture element, 16 colour mode. In this mode, select circuit 17 has no effect on signals passing through it. Accordingly, for each access of the refresh store, a group of four bytes of data, one byte from each refresh store plane, is fed unchanged to shift registers 21 through 24. Shift registers 21 through 24 are clocked together by timing signals on a line 25 from CRTC 14 to serialise the received bytes. The serial outputs from the shift registers are clocked through synchronising gates 26 through 29 to provide parallel 4 bit inputs to a palette register system 31. This register system comprises sixteen registers loadable from the central processor unit (through data and control lines, not shown) and selected by the 4 bit inputs. Each register stores 6 bits. The 6 bit outputs are applied to a 6 bit gate 32 and are clocked from this gate, by clock signals on line 25, to a further 6 bit gate 33. The outputs of both gates 32 and 33 are applied, through lines 34 and 39 respectively, to a combining circuit 35. The combining circuit also receives 4 bit colour select signals from a register 36 over lines 40. These colour select signals are applied to register 36 from the central processing unit over input lines 37. Combining circuit is controlled by mode signals from mode register over lines 16.

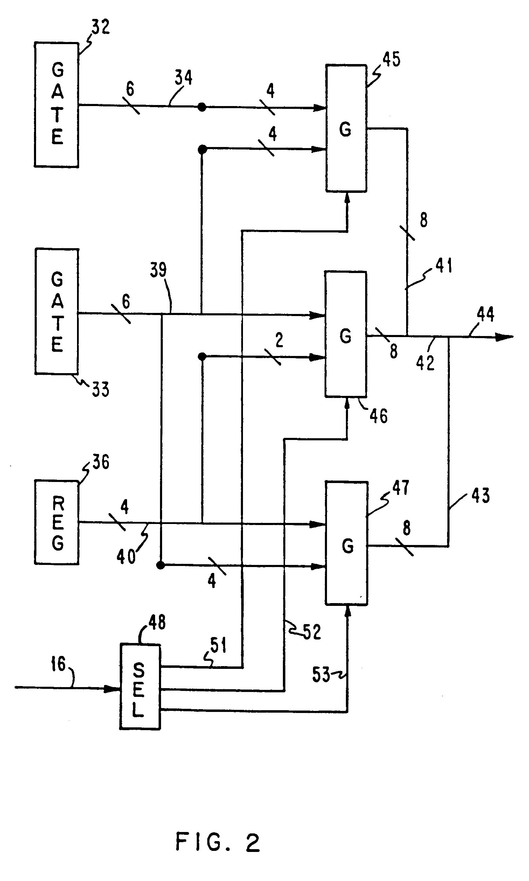

Figure 2 is a block diagram of an implementation of combining circuit 35. This figure shows the gates 32, 33 and register 36 of Figure 1 with their six, six and four line outputs 34, 39 and 40 respectively. These lines are selectively coupled to eight bit gates 45, 46 and 47, the eight bit outputs of which are applied through lines 41, 42 and 43 to a common output 44. A selector circuit 48 is responsive to mode input signals from register 38 (Fig. 1) over lines 16 to provide an output selectively on one of its three output lines 51, 52 or 53 thereby enabling one of the gates 45, 46 or 47. When gate 45, is enabled four bits from gate 32 and four bits from gate 33 are passed to output lines 44. When gate 46 is enabled, six bits from gate 33 and two bits from register 36 are applied to output lines 44. When gate 47 is enabled, four bits from gate 33 and four bits from register 36 are applied to output lines 44. These different outputs correspond to three modes of operation of the Figure 1 system as defined by the mode signals applied to register 38.

Referring back again to Figure 1, the output of combining circuit 35 on lines 44 is applied to a gate 54. This gate is clocked either at the clock frequency of the signals on clock line 25 from CRTC 14 or at half of that frequency. This half frequency is developed by a latch circuit 55 which is clocked by clock line 25 and has its -Q output coupled back to its D input. The clear input to latch circuit 55 is coupled to a display enable (DISPEN) line, which will be described later.

A selector circuit 56 determines whether the full or half frequency clock rate signals are applied to gate 54 in response to mode signals from mode register 38. As will become more clear later, the half frequency clocking is employed with the output of gate 45 (Figure 2), that is, with colour outputs comprising four bits from each of registers 32 and 33 and the full clocking frequency is used with the other modes of operation of the system.

The eight bit signals passing through gate 54 are employed to drive a colour look up table (CLUT) 58. This comprises 256, 18 bit registers selectable by the eight bit input signals. Of the eighteen bits in the registers, six drive a red digital-to-analog circuit 59, a further six, a green digital-to-analog circuit 60 and the last six, a blue digital-to-analog circuit 61 which respectively provide red, green and blue analog output signals to drive a colour cathode ray tube display.

As mentioned above, we are at present considering the operation of the system when operating in 640 × 200 picture elements, 16 colour mode. This mode corresponds to selecting register 47 (Figure 2) to provide outputs to the CLUT 58 at the full clock frequency, i.e. the CRTC clock output is directed unchanged to clock gate 54. In this mode, the colour select register 36 provides 4 bits of the CLUT address signals, these remain constant for given periods to define different ranges of colours to be displayed for each of these periods. The remaining 4 bits of the CLUT address come from register 33 and are, therefore determined by the content of the refresh memory planes and the palette system. The clock frequency from CRTC 14 corresponds to the frequency of picture element refreshing on the cathode ray tube, so that each line of picture elements on this tube is displayed in turn. This mode, with four variable bits for each picture element, provides sixteen different colours on the display.

In a further mode, operative when gate 46 in Figure 2 is selected and again using the full frequency clocking, 640 × 200 picture elements are again displayed. In this mode, however, there are only two fixed bits from colour select register 36 and gate 46 is supplied with all six colour bits from gate 33. Accordingly, in this mode, with six variable bits for each picture element, sixty four different colours can be displayed.

In the system as described so far, the refresh memory, parallel to serial shift registers 21 through 24, palette system 31, colour look up table 58 and digital to analog circuits 59 through 61 all form parts of known digital display systems.

The present display system is distinguished from those shown in the prior art primarily by the combination of the two gates 32 and 33 in Figure 1, the gate 45 in Figure 2 and the mode selectable clock frequency driving gate 54 in Figure 1. In the present embodiment, all of these items come into play to produce a display with 320 × 200 picture elements each with a choice of two hundred and fifty six colours.

In the present embodiment the 320 × 200 picture element mode is the third selectable mode. In this mode, it is gate 45 (Figure 2) in the combining circuit which is selected and the half clock frequency from latch 55 which is selected by selector 56 to drive gate 54.

When operating in the third mode, the data is read from the refresh store, passed through the parallel to serial shift registers 21 through 24 and gates 26 through 29 at the full clock rate. The gate outputs address the palette register system 31 which applies its six bit outputs to gates 32 from which they pass to gates 33 at the full clock rate. Four bits from each of these gates make up the eight bit output of gate 45 (Figure 2) which is applied through lines 44 to gate 54. This gate is now operating at a frequency half of the clocking frequency of the circuits up to this point. Accordingly, what passes through this gate to CLUT 58 is each alternate group of eight bits from gate 45, or in other words, in the stream of 6 bit outputs from palette system 31, four bits of each even and four bits of each odd numbered output are combined to form each CLUT input. As there are a full eight variable bits, and no fixed bits from register 36 are used, each group of bits addresses any of the 256 registers in CLUT 58. Accordingly, each displayed picture element can have any one of 256 colours. If the display is scanning at the same frequency, as before, halving the frequency of CLUT addressing from gate 54 means that only half the number of picture elements are formed. Thus, the cathode ray tube will now display 320 x 200 picture elements, but each element will be selected from 256 colours.

In the above description, the functions and structure of select circuit 17 in Figure 1 was, for simplicity, omitted. This circuit is a highly desirable, though not essential, part of the display system. It is effective in the low picture element definition mode, described as the third mode above. If we look at the storage requirements of the refresh store, it is clear that, without modification to the system, each displayed pel is divided from two corresponding bits from each of the refresh store planes 10 through 13, In other words, in each plane, each stored byte comprises one quarter of the data for each of four picture elements. Previously, and in the first and second modes of the present system, each stored byte in a plane contained one bit of each of eight picture element data groups. Accordingly, in order to change the data for a single pel, bit manipulation techniques are necessary. These techniques, however, become complex when pairs of bits have to be manipulated.

The select system 17 enables the refresh store to contain bytes in each plane, each byte containing two four bit sets of picture element data. In the first and second modes, the select circuit passes the data from the refresh store without change, and this picture element data is stored as before, with each byte in a plane containing eight bits each representing one bit of different picture element data. In the third mode, the data is stored as bytes, each containing two four bit groups of picture element data. These bytes are read from corresponding locations in consecutive planes. Thus, for example, if the first location to be read out for display is 0, the first byte is read from location 0 in plane 0, the next from location 0 in plane 1 followed by location 0 in plane 2 etc. For both CPU and CRTC accesses to the refresh memory, the two lowest order address bits now define the selected plane, thereby chaining the planes together.

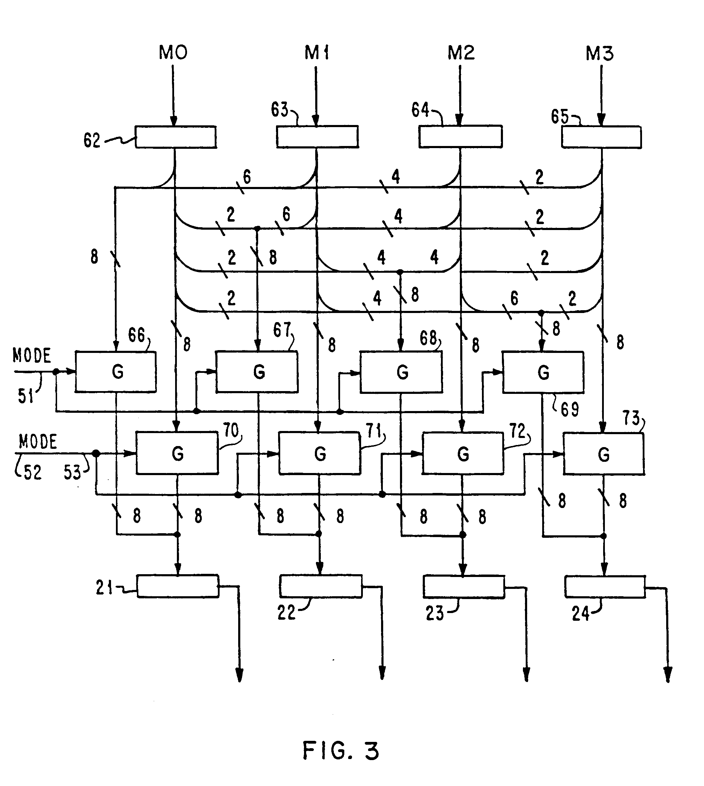

Figure 3 shows an embodiment of the select system 17 of Figure 1. At the top of Figure 3, four memory data registers 62 through 65 coupled to received data from memory planes M0 through M3 respectively. The data registers are connected through sets of gates 66 through 69 or 70 through 73 to the shift registers 21 through 24. Signals on a mode line 51 (see Figure 2), which are generated for the 320 × 200, 256 colour display mode, are coupled to gates 66 through 69. Signals which are generated for the other modes (i.e. those generated on lines 52 and 53 in Figure 2) are used to enable gates 70 through 73. In the high picture element definition modes, i.e. the 640 × 200 display element modes the signals from registers 62 through 65 are passed through gates 70 through 73 to shift registers 21 through 24 unchanged. In the low picture element definition mode, each gate 66 through 69 passes two bits from each of registers 62 through 65 to each of shift registers 21 through 24. In other words, each shift register receives four groups of two bits, each group from a different memory plane.

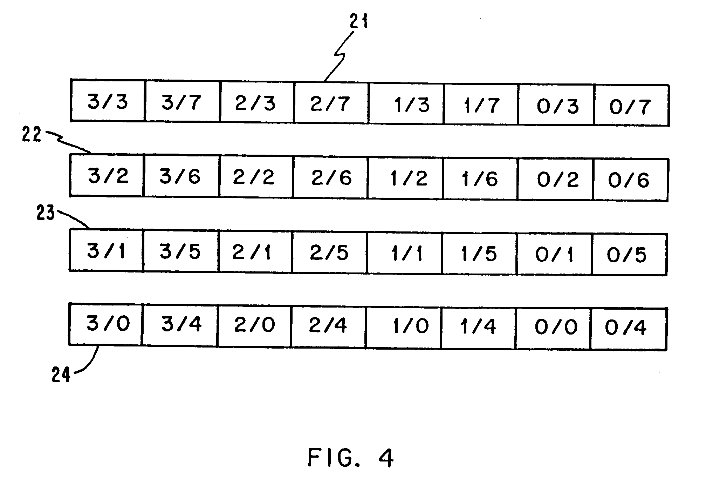

Figure 4 shows the bit transfer arrangement. This figure shows the four shift registers 21 through 24 with the serial output lines to the right of each register. In each register stage in Figure 4 the data content is labelled n/m, where n represents the memory plane and m represents the bit position of a byte read from that plane.

It will be recalled that, in the 320 × 200 display mode, the colour of each picture element is defined by eight bits comprising two consecutive groups of four bits each from the shift registers. Looking at the bit configuration of Figure 4, it is seen that the first two groups of four bits read from the shift registers comprise a full byte of data from refresh memory plane 0. This byte is followed by bytes from memory planes 1, 2 and then 3. Thus, the refresh store planes may be chained with each byte in a plane representing the data for a complete picture element. As mentioned above, the planes can then have consecutive picture element bytes in sequence whereby they are read out from plane 0 through to plane 3 and then back to plane 0.

In the above description of Figure 1, it was stated that the DISPEN input to latch 55 on line 57 would be explained. The object of this input is to ensure that, in the 320 × 200 picture element mode, the correct signals are applied from gates 32 and 33 through combining circuit 35 to CLUT 58. The DISPEN signal is a signal generated by CRTC 14 to indicate the time at which the display is to be enabled. In other words, it defines the portion of each scan line in the display which is modulated by the picture element data. In order to insure that the correct pairs of four bit groups are used, the DISPEN signal holds off latch until the start of the display portion of a scanning line. Then the latch is switched to generate a gating signal through selection 56 to gate 54 on the second full frequency clock cycle, that is when data has been passed through gate 32 to gate 33. Thus, the first picture element in the scanned line is defined by the first two four bit data groups.

In summary, what has been shown is a digital display system for driving a raster scan display device. Picture element data is held in a display store in all points addressable form in which the data layout in the store corresponds with the pel positions on the display device. While the raster scan speed remains the same, the data flow to the display can be set to a first frequency or half that frequency. With the first frequency, a display with high picture element resolution and limited colours is provided. With the half frequency, the picture element resolution is halved, but, by using pairs of groups of successive colour signals for each picture element, the colour resolution is greatly improved. For efficient refresh store utilisation, with the high picture resolution mode, the known system of reading out bytes from multiple storage planes, each byte contain bits relating to one colour component of the pels, is used. With the low picture resolution mode, each byte in the refresh store corresponds to a single picture element, and the store planes are chained. A selector circuit between the store and parallel/serial converters coupled to the planes of the store is switched to ensure appropriate data paths between the store and the converters.

While specific values have been used to define the various modes of operation of the system, it is clear that other values could be used, for example 640 × 200 picture elements, 4 colour and 320 × 200, 16 colour, provided that the number of picture elements in one mode is twice the number elements in a second mode. For both modes, the display scan velocity should be the same. In addition, by modifying the system by increasing the number of gates between the palette register and the combining circuit, modes in which the picture elements may vary by more than twice can be used. For example with three such gates, modes operating at a first frequency, half that frequency, and a quarter of that frequency may be used with corresponding picture element bit definitions.

**Claims**

1. A digital display system for driving a raster scan display device, including:

a refresh store (10-13) for storing picture element data at locations corresponding to locations of associated picture elements on said display device;

means (14) for reading consecutive picture element data groups from said refresh store at a first clock frequency;

means (21-24, 31, 58) for converting said data groups to picture element drive signal groups for the display; and

switching means (35) for switching said means (21 - 24, 31, 58) for converting between a first mode in which each said data group is converted to an individual picture element drive signal group delivered to the display device at said first clock frequency, and a second mode in which $2^n$ (where n is a positive integer) successive data groups are combined to generate an individual picture element drive signal group delivered to the display device a the n th sub harmonic of said clock frequency,

characterised in that said means for converting includes first gating means (32) coupled to receive picture element data groups, and second gating means (33) coupled to receive the output of said first gating means (32), said first and second gating means for transmitting only the output of said second gating means (33) in said first mode and for combining the outputs of said first and second gating means in said second mode.

2. A digital display system according to Claim 1 in which n is 1.

3. A digital display system according to Claim 2 including third gating means (54) coupled to receive outputs from said combining means, said third gating means being clocked at said first clock frequency in said first mode and at half said first clock frequency in said second mode.

4. A display system according to Claim 3 including a colour look up table system (58) coupled to receive outputs from said third gating means for generating digital drive signal groups for said display device.

5. A display system according to any of claims 2 to 4 including a palette register system (31) coupled to receive consecutive picture element data groups derived from said refresh store and for generating, in response thereto, said picture element data groups for said first gating means.

6. A display system according to Claim 5 in which said refresh memory comprises a plurality of colour planes (40-43) and including a like plurality of parallel to serial converters (21-24), each for receiving data bytes from the memory, and each having a serial output coupled to said palette register system whereby said palette register system receives groups of data having bit widths corresponding in number to the parallel to serial converters.

7. A display system according to Claim 6 in which the refresh store comprises four colour planes, and including a selector system (17) coupled between the refresh store and the parallel to serial converters, said selector system being coupled to said switching means for switching into a first mode in which each byte of data read from a refresh store plane is coupled into the parallel to serial converter associated with the plane, and a second mode in which pairs of bits from each byte read from a storage plane are directed into associated pairs of positions in the parallel to serial converters, whereby each parallel to serial converter receives two bits from each plane of the refresh store.

**Revendications**

1. Système numérique d'affichage pour commander un dispositif d'affichage à balayage à trame, comprenant:

une mémoire de rafraîchissement (10-13) pour emmagasiner des données d'élément d'image aux positions correspondant aux positions des éléments d'image associés sur ledit dispositif d'affichage;

des moyens (14) pour lire des groupes de données d'élément d'image dans ladite mémoire de rafraîchissement à une première fréquence d'horloge;

des moyens (21-24, 31, 58) pour convertir lesdits groupes de données en groupes de signaux de commande d'élément d'image pour l'affichage; et

des moyens de commutation (35) pour commuter lesdits moyens (21-24, 31, 58) pour une conversion entre un premier mode dans lequel chacun desdits groupes de données est converti en un groupe de signaux de commande d'élément d'image envoyé au dispositif d'affichage à ladite première fréquence d'horloge, et un deuxième mode dans lequel $2^n$ (où n est un nombre entier positif) groupes de données successifs sont combinés pour engendrer un groupe de signaux de commande d'élément d'image envoyé au dispositif d'affichage au nième sous-harmonique de ladite fréquence d'horloge,

caractérisé en ce que lesdits moyens pour convertir comprennent des premiers moyens de passage (32) couplés pour recevoir des groupes de données d'élément d'image, et des deuxièmes moyens de passage (33) couplés pour recevoir la sortie desdits premiers moyens de passage (32), lesdits premiers et deuxièmes moyens de passage étant utilisés pour transmettre uniquement la sortie desdits deuxièmes moyens de passage (33) dans ledit premier mode et pour combiner les sorties desdits premiers et deuxièmes moyens de passage dans ledit deuxième mode.

2. Système numérique d'affichage selon la revendication 1, dans lequel n est 1.

3. Système numérique d'affichage selon la revendication 2, comprenant des troisièmes moyens de passage (54) couplés pour recevoir les sorties provenant desdits moyens de combinaison, lesdits troisièmes moyens de passage étant synchronisés à ladite première fréquence d'horloge dans ledit premier mode et à la moitié de ladite première fréquence d'horloge dans ledit deuxième mode.

4. Système d'affichage selon la revendication 3, comprenant un système de table de consultation de couleurs (58) couplé de manière à recevoir les sorties provenant desdits troisièmes moyens de passage pour engendrer des groupes de signaux de commande numériques pour ledit dispositif d'affichage.

5. Système d'affichage selon l'une quelconque des revendications 2 à 4, comprenant un système de registre de palette (31) couplé de manière à recevoir des groupes de données d'élément d'image consécutifs dérivés de ladite mémoire de rafraîchissement et pour engendrer, en réponse à ceux-ci, lesdits groupes de données d'élément d'image pour lesdits premiers moyens de passage.

6. Système d'affichage selon la revendication 5, dans lequel ladite mémoire de rafraîchissement comprend une pluralité de plans de couleur (40-43) et comportant une pluralité semblable de convertisseurs en parallèle-série (21-24), chacun pour recevoir des multiplets de données provenant de la mémoire, et chacun ayant une sortie en série couplée audit système de registre de palette, ce qui fait que ledit système de registre de palette reçoit des groupes de données ayant des largeurs binaires correspondant en nombre aux convertisseurs en parallèle-série.

7. Système d'affichage selon la revendication 6, dans lequel la mémoire de rafraîchissement comprend quatre plans de couleur, et comportant un système sélecteur (17) couplé entre la mémoire de rafraîchissement et les convertisseurs en parallèle-série, ledit système sélecteur étant couplé auxdits moyens de commutation pour une commutation dans ledit premier mode dans lequel chaque multiplet de données lu dans un plan de la mémoire de rafraîchissement est couplé dans le convertisseur en parallèle-série associé au plan, et dans un deuxième mode dans lequel des paires de bits de chaque multiplet lu dans un plan de mémoire sont dirigées en paires associées de positions dans les convertisseurs en parallèle-série, ce qui fait que chaque convertisseur en parallèle-série reçoit deux bits depuis chaque plan de la mémoire de rafraîchissement.

**Patentansprüche**

1. 1. Digitales Anzeigesystem zum Treiben einer Anzeigeeinrichtung mit Zeilenabtastung, das folgendes aufweist:
einen Auffrischungsspeicher (10-13) zum Speichern von Bildelementdaten bei Stellen, die Stellen zugeordneter Bildelemente auf der Anzeigeeinrichtung entsprechen,
ein Mittel (14) zum Lesen aufeinanderfolgender Datengruppen von Bildelementen aus dem Auffrischungsspeicher mit einer ersten Taktgeberfrequenz,
ein Mittel (21-24, 31, 58) zum Umwandeln der Datengruppen in Treibersignalgruppen von Bildelementen für die Anzeige und
ein Schaltermittel (35) zum Schalten des Mittels (21-24, 31, 58) zum Umwandeln zwischen einem ersten Modus, in dem jede Datengruppe in eine einzelne Treibersignalgruppe von Bildelementen umgewandelt wird, die mit der ersten Taktgeberfrequenz an die Anzeigeeinrichtung geliefert wird, und einem zweiten Modus, in dem $20^n$ (wo n eine positive ganze Zahl ist) aufeinanderfolgende Datengruppen kombiniert werden, um eine einzelne Treibergruppe von Bildelementen zu erzeugen, die mit der n-ten subharmonischen der Taktgeberfrequenz an die Anzeigeeinrichtung geliefert wird,
dadurch gekennzeichnet, daß das Mittel zum Umwandeln folgendes aufweist: ein erstes Tormittel (32), das angeschlossen ist, um Datengruppen von Bildelementen zu empfangen und ein zweites Tormittel (33), das angeschlossen ist, um den Ausgang des ersten Tormittels (32) zu empfangen, und die ersten und zweiten Tormittel, um in dem ersten Modus nur den Ausgang des zweiten Tormittels (33) zu übertragen und um die Ausgänge der ersten und zweiten Tormittel in dem zweiten Modus zu kombinieren.

2. Digitales Anzeigesystem nach Anspruch 1, bei welchem n gleich 1 ist.

3. Digitales Anzeigesystem nach Anspruch 2, das ein drittes Tormittel (54) aufweist, das angeschlossen ist, um Ausgänge aus den kombinierenden Mitteln zu empfangen, wobei das dritte Tormittel mit der ersten Taktgeberfrequenz in dem ersten Modus und mit der halben ersten Taktgeberfrequenz in dem zweiten Modus taktgesteuert ist.

4. Anzeigesystem nach Anspruch 3, das ein System (58) für eine Farbsuchtabelle aufweist, das angeschlossen ist, um Ausgänge aus dem dritten Tormittel zu empfangen, um digitale Treibersignalgruppen für die Anzeigeeinrichtung zu erzeugen.

5. Anzeigesystem nach irgendeinem der Ansprüche 2 bis 4, das ein System (31) für ein Palettenregister aufweist, das angeschlossen ist, um aufeinanderfolgende Datengruppen von Bildelementen zu empfangen, die aus dem Auffrischungsspeicher gebildet sind, und um entsprechend diesen die Datengruppen von Bildelementen für das erste Tormittel zu erzeugen.

6. Anzeigesystem nach Anspruch 5, bei welchem der Auffrischungsspeicher eine Mehrzahl von Farbebenen (40-43) aufweist und eine gleiche Mehrzahl von Parallel-Seriell-Wandlern (21-24), jeden zum Empfangen von Datenbytes aus dem Speicher, besitzt und wobei jeder einen seriellen, mit dem System für ein Palettenregister verbundenen Ausgang aufweist, wodurch das System für ein Palettenregister Gruppen von Daten mit Bitbreiten empfängt, welche der Anzahl nach den Parallel-Seriell-Wandlern entsprechen.

7. Anzeigesystem nach Anspruch 6, bei welchem der Auffrischungsspeicher vier Farbebenen aufweist und ein Selektorsystem (17) besitzt, das zwischen den Auffrischungsspeicher und die Parallel-Seriell-Wandler geschaltet ist, wobei das Selektorsystem mit dem Schaltermittel verbunden ist, um in folgendes zu schalten: in einen ersten Modus, in dem jedes Byte von Daten, das aus einer Auffrischungsspeicherebene gelesen ist, in den Parallel-Seriell-Wandler gelegt wird, welcher der Ebene zugeordnet ist, und in einen zweiten Modus, in dem Paare von Bits aus jedem, aus einer Speicherebene gelesenen Byte in zugeordnete Paare von Positionen in Parallel-Seriell-Wandlern übergeführt werden, wodurch jeder Parallel-Seriell-Wandler aus jeder Ebene des Auffrischungsspeichers zwei Bits empfängt.

FIG. 1

FIG. 2

FIG. 3

| 3/3 | 3/7 | 2/3 | 2/7 | 1/3 | 1/7 | 0/3 | 0/7 |

21

| 3/2 | 3/6 | 2/2 | 2/6 | 1/2 | 1/6 | 0/2 | 0/6 |

22

| 3/1 | 3/5 | 2/1 | 2/5 | 1/1 | 1/5 | 0/1 | 0/5 |

23

| 3/0 | 3/4 | 2/0 | 2/4 | 1/0 | 1/4 | 0/0 | 0/4 |

24

FIG. 4